# FASCICULE DE BREVET EUROPEEN

(11) **EP 1 167 790 B1**
(45) Date de publication et mention de la délivrance du brevet: **26.01.2005**
(21) Numéro de dépôt: 01401520.0
(22) Date de dépôt: 12.06.2001
(51) Int. Cl.: F16C 29/04, F16C 27/06, B62D 1/16, F16C 33/38, F16C 3/035

(54) **Module de coulisse à billes et ensemble correspondant**
Wälzlagergleitführung
Roller bearing sliding unit

(30) Priorité: 28.06.2000 FR 0008342
(43) Date de publication de la demande: 02.01.2002
(73) Titulaire: TIMKEN FRANCE, 18102 Vierzon Cedex (FR)
(72) Inventeur: Paillet, Stéphane, 18100 Mery sur Cher (FR)
(74) Mandataire: Jacobson, Claude

(56) Documents cités:
- WO-A-00/15968
- DE-A- 19 604 036
- FR-A- 2 795 787
- US-A- 4 128 278
- US-A- 5 737 971

## Description

La présente invention concerne un module de coulisse linéaire à billes pour la transmission d'une force de portée principale entre deux pièces sans jeu relatif et un coulissement linéaire des deux pièces l'une par rapport à l'autre, perpendiculaire à la force de portée, du type comprenant une rangée de billes disposée selon la direction de coulissement linéaire, et une cage de billes maintenant les billes à une distance prédéterminée entre elles.

L'invention s'applique notamment aux colonnes de direction pour véhicules automobiles.

On connaît dans l'état de la technique des colonnes de direction pour véhicules automobiles comprenant des dispositifs de filtration de chocs axiaux. Ces dispositifs diminuent les vibrations et amortissent les chocs transmis des roues au volant.

Les colonnes de direction connues de ce genre comprennent généralement une demi-colonne mâle emboîtée partiellement dans une demi-colonne femelle.

Une première solution connue comprend des cannelures ménagées dans la circonférence extérieure/inférieure des demi-arbres mâle/femelle à l'emplacement du chevauchement. De la matière thermoplastique est injectée dans l'espace présent entre les deux demi-arbres.

Cette solution présente l'inconvénient d'une formation de jeu entre les deux pièces à cause de la faible résistance mécanique de la matière thermoplastique.

Une deuxième solution connue comprend des rainures axiales profilées ménagées en vis-à-vis dans la surface extérieure/intérieure des demi-arbres mâle/femelle. Les rainures forment des pistes de roulement pour des rangées de billes disposées dans chaque paire de rainures. Au moins deux paires de pistes étant prévues, le couple de rotation de l'arbre est transmis par les billes, tandis qu'un coulissement longitudinal des deux demi-arbres entre eux est permis.

Cette solution présente un coût élevé de fabrication et de montage à cause des nombreuses pièces à monter et des faibles tolérances de fabrication nécessaires.

Le document EP-A-1 065 397 (cité selon l'article 54(3)) montre un autre module de coulisse linéaire à billes.

L'invention a pour but de pallier ces inconvénients et de proposer un guidage linéaire entre deux pièces empêchant une transmission de chocs qui soit peu coûteuse et facile à monter.

A cet effet, l'invention a pour objet un module du type précité, comportant en outre :
- une barrette de roulement des billes, cette barrette s'étendant selon la direction de coulissement et étant sensiblement plus longue que la rangée de billes ;
- un boîtier qui entoure sensiblement la barrette de roulement et qui coopère avec des parties latérales de retenue de la cage, et
- des premiers moyens de ressort comprimés, au moins en cours d'utilisation, entre le boîtier et le côté de la barrette de roulement opposé aux billes.

Les modes particuliers de réalisation de l'invention peuvent comporter l'une ou plusieurs des caractéristiques suivantes :
- le module comprend en outre des seconds moyens de ressort disposés entre chaque bord latéral de la barrette de roulement et le boîtier ;
- les moyens de ressort comprennent un organe en matériau plastique élastique ;
- les moyens de ressort comprennent un organe en acier de ressort ;
- le boîtier est en tôle d'acier de ressort, et les moyens de ressort comprennent des parties du boîtier déformées vers la barrette de roulement ;
- les parties déformées sont des bossages ou des languettes pliées ;
- la barrette de roulement est un organe monobloc ;
- la barrette de roulement est constituée de deux organes séparés par une fente longitudinale médiane de la barrette ;
- le boîtier comprend, à au moins une extrémité, des moyens de butée qui bloquent longitudinalement la barrette de roulement par rapport au boîtier ;
- le boîtier comprend des moyens de butée de la rangée de billes ou de la cage de billes ;
- les moyens de butée sont constitués par au moins une languette pliée du boîtier qui recouvre une extrémité de la barrette de roulement et la rangée de billes dans la direction longitudinale ; et
- la barrette de roulement définit deux lignes longitudinales de contact avec les billes, symétriques par rapport à un plan médian de la barrette de roulement.

L'invention a également pour objet un ensemble comprenant un arbre et un manchon, l'arbre s'emboîtant dans le manchon, caractérisé en ce que l'arbre ou le manchon comporte au moins deux, et notamment trois, évidements répartis circonférentiellement dans chacun desquels est reçu au moins un module comme défini ci-dessus, et l'autre élément de l'arbre et de manchon comporte un nombre correspondant de rainures de roulement pour les billes.

Selon des modes particuliers de réalisation, l'ensemble peut comporter une ou plusieurs des caractéristiques suivantes :
- chaque rainure définit deux lignes longitudinales de contact avec les billes du ou de chaque module associé, symétriques par rapport à un plan médian de la rainure ; et
- l'ensemble constitue un ensemble de colonne de direction pour véhicule automobile.

L'invention sera mieux comprise à la lecture de la description qui va suivre, donnée uniquement à titre d'exemple et faite en se référant aux dessins annexés, sur lesquels :
- la figure 1 est une vue en coupe transversale d'une colonne de direction comprenant trois modules de coulisse selon un premier mode de réalisation de l'invention ;
- la figure 2 est une vue en coupe longitudinale d'un module de la figure 1 à plus grande échelle, suivant la ligne II-II de la figure 1 ;
- la figure 3 est une vue en coupe transversale d'une variante d'un module de la figure 1, à plus grande échelle ;
- la figure 4 est une vue en coupe selon la ligne IV-IV de la figure 3 ;
- la figure 5 est une vue en coupe transversale d'une deuxième variante d'un module de coulisse à billes selon le premier mode de réalisation de l'invention ;
- la figure 6 une vue en coupe selon la ligne VI-VI de la figure 5 ;
- la figure 7 est une vue en coupe transversale d'une colonne de direction comprenant deux modules de coulisse selon un deuxième mode de réalisation de l'invention ;
- la figure 8 est une vue en coupe transversale d'une variante du module de la figure 7, à plus grande échelle.

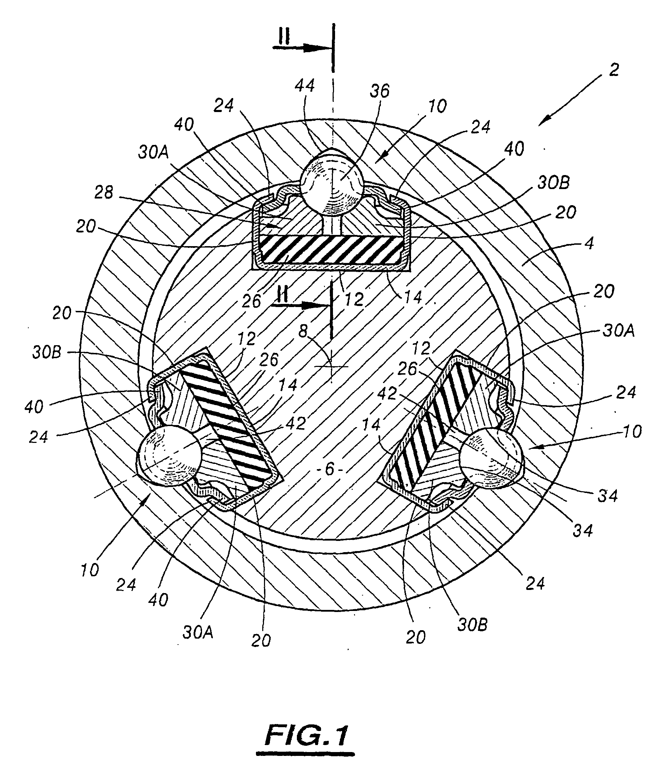

Sur la figure 1 on a représenté un ensemble de joint de translation pour colonne de direction désigné par la référence générale 2.

L'ensemble 2 comprend un demi-arbre femelle 4, ici sous la forme d'un manchon, et un demi-arbre mâle 6 emboîté dans le demi-arbre femelle 4 et relié à un volant de direction (non représenté). Les deux demi-arbres 4,6 ont un axe 8 commun perpendiculaire au plan de la figure 1.

Les deux demi-arbres 4,6 sont reliés l'un à l'autre de façon coulissante selon l'axe 8. De plus, ils sont solidaires en rotation autour de cet axe 8.

La liaison entre les deux demi-arbres 4,6 est effectuée par trois modules 10 de coulisse à billes interposés entre les deux demi-arbres 4,6 et répartis régulièrement sur la circonférence du demi-arbre mâle 6. Chaque module 10 est reçu dans un évidement 12 ménagé dans le demi-arbre mâle 6, et s'étend parallèlement à son axe 8.

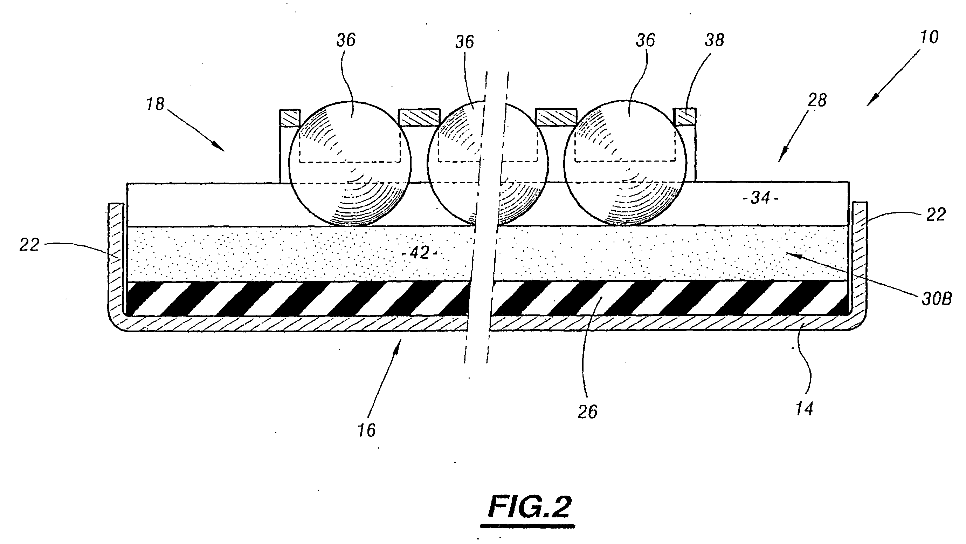

Chaque module 10 (voir figure 2) comprend un boîtier 14 en tôle de forme allongée sensiblement parallélépipédique et ayant un côté fermé 16 de fond s'appliquant contre le fond de l'évidement 12 correspondant du demi-arbre mâle 6, cet évidement ayant au moins la même longueur que le boîtier 14.

Le boîtier est immobilisé axialement par serrage du boîtier 14 dans l'évidement 12, et ceci soit par ajustage serré soit par des butées mécaniques.

Sur le côté opposé au côté fermé 16, chaque boîtier 14 présente un côté ouvert 18 vers le demi-arbre femelle 4.

Le boîtier 14 est fabriqué à partir d'un flan sensiblement cruciforme dont les quatre ailes sont pliées à 90° afin de former des parois latérales 20 et frontales 22. De plus, les extrémités supérieures des ailes longitudinales sont rabattues vers l'intérieur du boîtier et forment des languettes de retenue 24. Les parois frontales 22 forment des moyens de retenue et de butée longitudinales (voir ci-après).

Un bloc de ressort 26 en matière élastomère ou analogue est disposé sur le fond du boîtier 14 en le recouvrant et s'applique contre les parois latérales 20 du boîtier.

Une barrette de roulement 28 est posée sur le bloc de ressort 26 et s'étend selon la direction longitudinale du boîtier 14. Elle présente sensiblement la même longueur que le boîtier 14. La barrette de roulement 28 est constituée de deux demi-barrettes 30A,30B séparées par une fente longitudinale médiane.

La partie médiane de chaque demi-barrette 30A,30B dirigée vers le côté ouvert du boîtier 14 comporte un profil de roulement incliné en forme de V arrondi, et forme une piste de roulement 34 pour une rangée de billes 36. Le profil de roulement présente une forme telle que chaque bille 36 a un point de contact avec chaque piste de roulement 34, de part et d'autre de la fente médiane, afin d'assurer une bonne stabilité latérale.

Les billes 36 sont maintenues espacées l'une de l'autre par une cage 38, fabriquée par exemple en tôle ou en matière plastique renforcée par des fibres. L'ensemble des billes et de la cage est nettement plus court que le boîtier 14 (figure 2). En conséquence, la cage 38 peut se déplacer linéairement entre deux positions d'extrémités dans lesquelles elle bute contre les parois d'extrémités 22 du boîtier 14.

La cage 38 comporte des ailes latérales 40 coudées, en forme de S en section transversale, s'étendant vers les parois latérales 20 du boîtier et vers le bloc en matière plastique 26. Les extrémités rabattues 24 du boîtier 14 s'étendent au-dessus des ailes latérales 40 et retiennent la cage 38.

Enfin, la fente entre les deux demi-barrettes 30A, 30B est emplie d'une matière de graissage 42, afin de lubrifier les pistes de roulement 34.

La partie libre des billes 36 est reçue, à l'état monté, dans des rainures longitudinales de roulement 44 ménagées dans la surface intérieure du demi-arbre femelle 4. Les rainures de roulement 44 ont un profil analogue à celui des pistes de roulement 34 des barrettes de roulement 28 et sont disposées vis-à-vis des évidements 12 du demi-arbre mâle 6.

A l'état monté, les billes 36 de chaque module sont élastiquement sollicitées contre les pistes de roulement 34 de la barrette 28 par l'intermédiaire du bloc de ressort 26 qui est comprimé.

Le fait que la barrette de roulement 28 soit divisée a pour effet que la sollicitation radiale des billes 36 sans jeu est effectuée par un seul organe à force élastique radiale, à savoir le bloc de ressort 26. Les deux demi-barrettes 30A,30B sont toujours pressées contre les parois latérales 20 du boîtier 14 sans jeu parce qu'une force radiale crée une force de réaction à composante circonférentielle qui tend à écarter les deux demi-barrettes 30A,30B et les presse contre le bloc de ressort 26.

Les modules de coulisse à billes selon l'invention sont montés dans une colonne de direction de la façon suivante.

Tout d'abord, on insère les trois modules 10 de coulisse à billes dans les évidements 12 du demi-arbre mâle 6.

Puis on pousse les trois rangées de billes 36 vers l'extrémité de la barrette de roulement 28 dirigée vers le demi-arbre femelle 4, à l'état monté. Ensuite, on aligne l'axe du demi-arbre femelle 4 avec l'axe du demi-arbre mâle 6 ainsi que les pistes de roulement 44 du demi-arbre femelle avec les rangées de billes 36. Puis on insère l'extrémité du demi-arbre mâle 6 dans le manchon. Les billes 36 sont alors pressées contre les pistes 34,44 de roulement de la barrette de roulement et du demi-arbre femelle et compriment le bloc de ressort 26 de chaque module.

En conséquence, la liaison entre les deux demi-arbres 4,6 est dépourvue de tout jeu radial, tandis que dans la direction longitudinale les demi-arbres mâle 6 et femelle 4 peuvent coulisser l'un par rapport à l'autre dans les limites définies par les parois de butée 22.

On constate que le montage des trois modules 10 et des deux demi-arbres 4, 6 s'effectue rapidement et facilement.

En pratique, on prévoira généralement deux ou plus de deux modules 10 sur une même génératrice du demi-arbre mâle. Bien entendu, deux ou plus de deux modules peuvent être juxtaposés dans le même évidement 12.

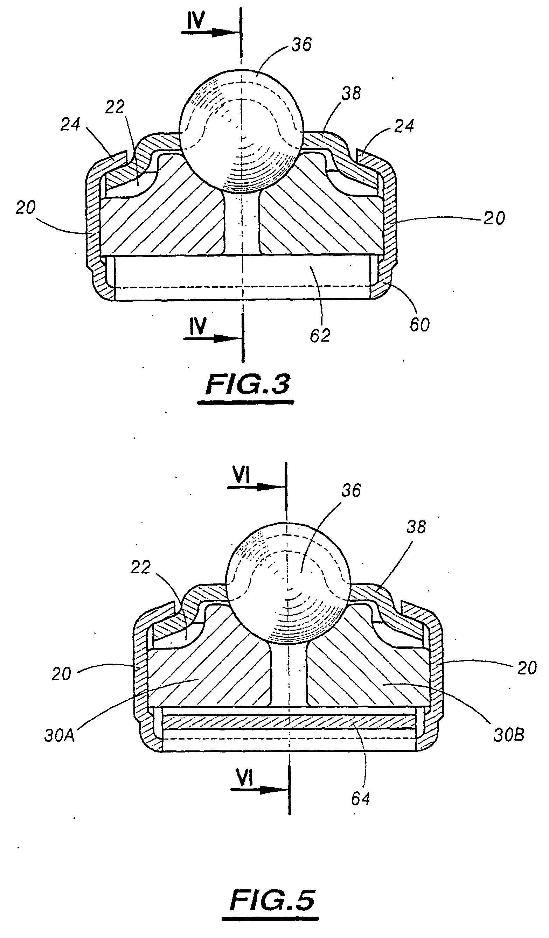

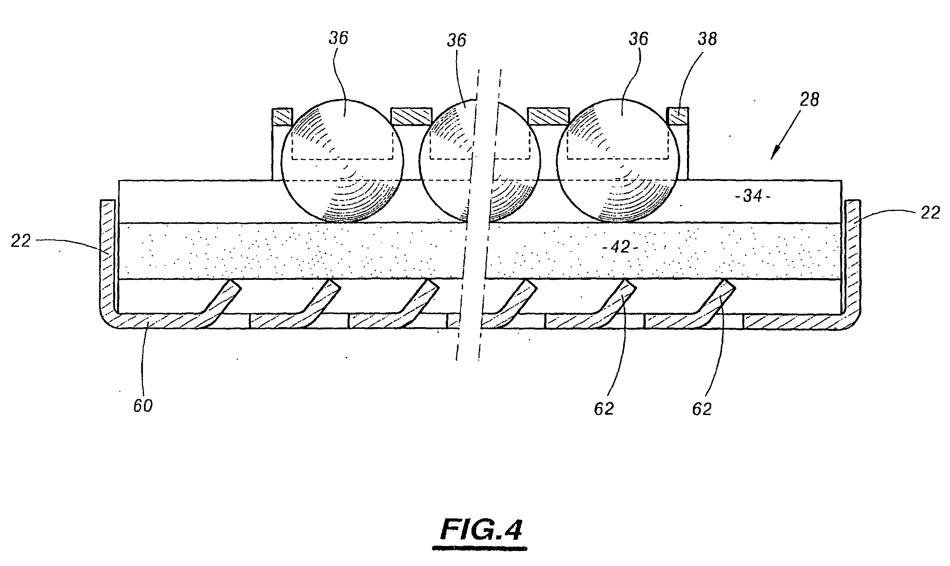

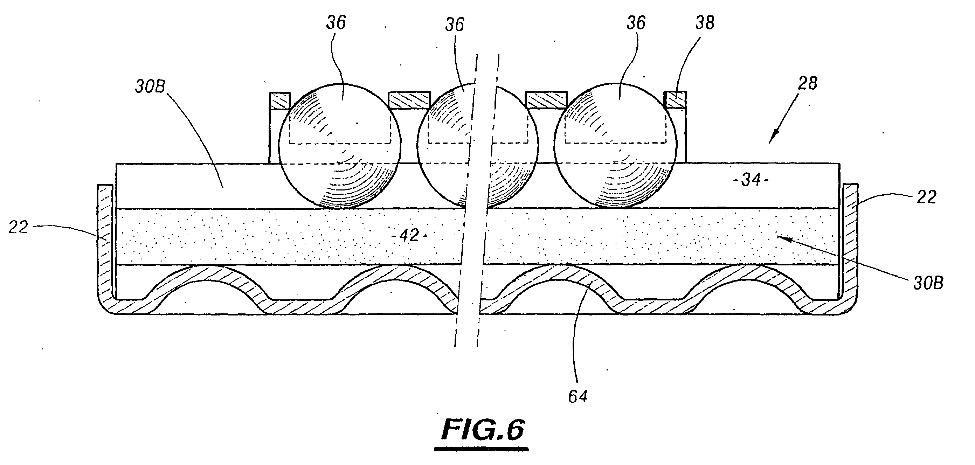

Sur les figures 3 et 4 ainsi que les figures 5 et 6, on a représenté deux variantes du module des figures 1 et 2. Dans ce qui suit, seulement les différences entre ces deux variantes et le module décrit ci-dessus seront expliquées.

Le module des figures 3 et 4 comprend un boîtier 60 en tôle d'acier à ressort.

Comme différence par rapport à la variante précédente, le bloc en matière plastique élastomère 26 est remplacé par des parties du boîtier 60 déformées vers la barrette de roulement 28.

Dans le module montré sur les figures 3 et 4, ces parties déformées sont des languettes transversales 62 des parties découpées dans le fond du boîtier 60 et pliées en oblique vers l'intérieur, sur lesquelles reposent les deux demi-barrettes 30A, 30B.

Dans la variante du boîtier du module montré sur les figures 5 et 6, les parties déformées du boîtier sont des bossages cylindriques 64 à profil en arc de cercle qui s'étendent selon la direction transversale.

On constate que ces variantes permettent d'économiser une pièce, à savoir le bloc de ressort 26 en matière plastique élastomère. Ainsi, le coût de fabrication et de montage est diminué.

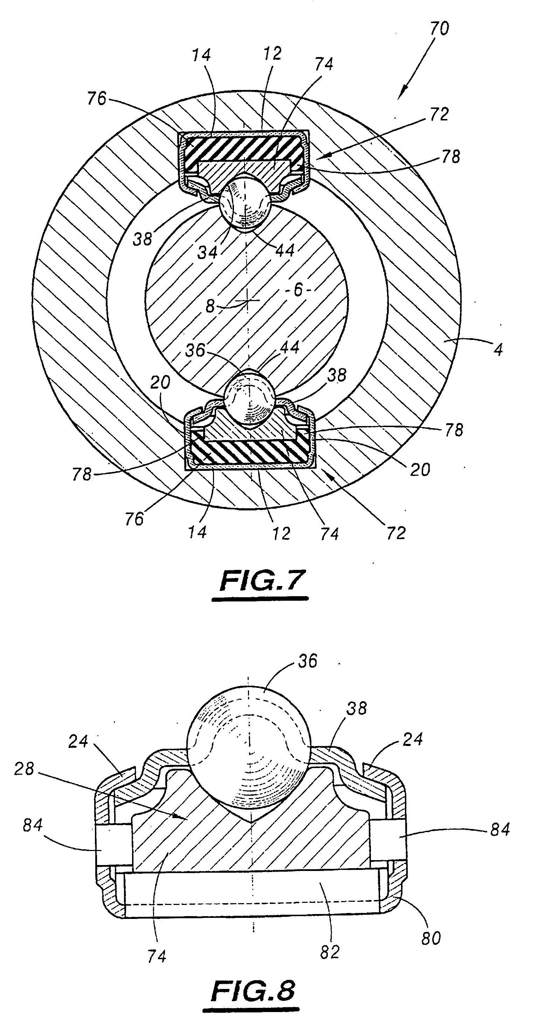

Sur la figure 7 on a représenté un joint de translation 70 pour colonne de direction comportant deux modules 72 de coulisse à billes selon un deuxième mode de réalisation de l'invention.

Ce joint de translation 70 comprend un demi-arbre mâle 6 et un demi-arbre femelle 4 reliés par deux modules 72 de coulisse à billes.

Comme différence par rapport au premier mode de réalisation, c'est le demi-arbre femelle 4 qui comporte les évidements 12 dans lesquels les modules sont reçus, tandis que les rainures de roulement 44 sont ménagées dans la circonférence du demi-arbre mâle 6.

Le boîtier du module 14, les billes 36 et la cage 38 sont identiques au premier mode de réalisation (figure 1).

Comme différence par rapport au premier mode de réalisation, la barrette de roulement 28 est constituée d'une barrette monobloc 74 dans laquelle sont ménagées les pistes de roulement 34 des billes.

Le bloc de ressort 76 en matière élastomère est sensiblement de forme parallélépipédique et comporte deux saillies latérales 78 s'étendant de chaque côté entre la barrette de roulement 74 et les parois latérales 20 du boîtier 14. Ces deux saillies latérales 78 sont comprimées par les faces latérales de la barrette de roulement 74, de sorte que les tolérances de fabrication de la barrette 74 et du boîtier peuvent être élevées.

Le montage d'un module selon ce deuxième mode de réalisation reste essentiellement le même que celui du premier mode de réalisation.

Sur la figure 8 on a représenté une coupe transversale d'une variante d'un module de la figure 7.

Le boîtier 80 de ce module est fabriqué en tôle d'acier de ressort. Le bloc de ressort 76 en matière plastique élastomère est remplacé par des languettes 82 du fond du boîtier 80 pliées en oblique vers la barrette de roulement 74, analogues aux languettes pliées 62 du module de la figure 4. Les parties latérales 78 du bloc en matière plastique élastomère (figure 7) sont également remplacées par des parties 84 découpées de la paroi latérale du boîtier et pliées latéralement en oblique vers l'intérieur du boîtier 80.

Il est clair que le nombre de modules répartis sur la circonférence de l'espace entre les deux demi-arbres 4,6 peut être choisi selon le cas d'application. De plus, la localisation des évidements 12 dans le demi-arbre mâle 6 ou femelle 4 est indépendante du mode de réalisation du module.

Les modules selon l'invention ne doivent pas nécessairement être répartis régulièrement sur la circonférence de l'arbre. Dans le cas où les charges appliquées sur l'arbre sont asymétriques, les modules peuvent être placés de façon correspondante.

On constate que les modules selon l'invention permettent une fabrication des demi-arbres mâle et femelle avec des tolérances larges, grâce aux éléments de ressort. Ces éléments de ressort permettent également un montage aisé des deux demi-arbres 4,6 à coulissement longitudinal et un accouplement radial de ces derniers sans jeu.

De plus, la rigidité et l'effort de coulissement peuvent être réglées par ces éléments de ressort.

Il est à noter que les modules selon l'invention peuvent être utilisés de façon générale pour toute application où l'on doit relier deux pièces de façon coulissante selon une direction longitudinale dans certaines limites, et de façon fixe et sans jeu dans une direction transversale perpendiculaire à la direction longitudinale.

## Revendications

1. Module de coulisse linéaire à billes pour la transmission d'une force de portée principale entre deux pièces (4,6) sans jeu relatif et un coulissement linéaire des deux pièces (4,6) l'une par rapport à l'autre, perpendiculaire à la force de portée, du type comprenant :
- une rangée de billes (36) disposée selon la direction de coulissement linéaire, et
- une cage de billes (38) maintenant les billes (36) à une distance prédéterminée entre elles
- une barrette de roulement (28) des billes (36), cette barrette (28) s'étendant selon la direction de coulissement et étant sensiblement plus longue que la rangée de billes (36) ;
- un boîtier (14;60;80) qui entoure sensiblement la barrette de roulement (28) et qui coopère avec des parties latérales de retenue de la cage, et
- des premiers moyens de ressort (26;62;64;76;82) comprimés, au moins en cours d'utilisation, entre le boîtier (14;60;80) et le côté de la barrette de roulement (28) opposé aux billes (36).

2. Module selon la revendication 1, **caractérisé en ce qu'**il comprend en outre des seconds moyens de ressort (78;84) disposés entre chaque bord latéral de la barrette de roulement (28) et le boîtier (14;80).

3. Module selon la revendication 1 ou la revendication 2, **caractérisé en ce que** les moyens de ressort comprennent un organe en matériau plastique élastique (26; 76).

4. Module selon l'une quelconque des revendications 1 à 3, **caractérisé en ce que** les moyens de ressort comprennent un organe (62;64;82;84) en acier de ressort.

5. Module selon la revendications 4, **caractérisé en ce que** le boîtier (60;80) est en tôle d'acier de ressort, et **en ce que** les moyens de ressort comprennent des parties (62;64;82;84) du boîtier déformées vers la barrette de roulement (28).

6. Module selon la revendication 5, **caractérisé en ce que** les parties déformées sont des bossages (64) ou.des languettes pliées (62;82;84).

7. Module selon la revendication 2 ou l'une quelconque des revendications qui en dépendent, **caractérisé en ce que** la barrette de roulement (28) est un organe monobloc (74).

8. Module selon l'une quelconque des revendications 1 à 6, **caractérisé en ce que** la barrette de roulement (28) est constituée de deux organes (30A;30B) séparés par une fente longitudinale médiane de la barrette.

9. Module selon l'une quelconque des revendications précédentes, **caractérisé en ce que** le boîtier (14;60;80) comprend, à au moins une extrémité, des moyens de butée (22) qui bloquent longitudinalement la barrette de roulement (28) par rapport au boîtier (14;60;80).

10. Module selon l'une quelconque des revendications précédentes, **caractérisé en ce que** le boîtier (14;60;80) comprend des moyens de butée (22) de la rangée de billes (36) ou de la cage de billes (38).

11. Module selon la revendication 8 ou 9, **caractérisé en ce que** les moyens de butée sont constitués par au moins une languette pliée (22) du boîtier qui recouvre une extrémité de la barrette de roulement (28) et la rangée de billes (36) dans la direction longitudinale.

12. Module selon l'une quelconque des revendications précédentes, **caractérisé en ce que** la barrette de roulement (28) définit deux lignes longitudinales de contact avec les billes (36), symétriques par rapport à un plan médian de la barrette de roulement (28).

13. Ensemble comprenant un arbre (6) et un manchon (4), l'arbre s'emboîtant dans le manchon, **caractérisé en ce que** l'arbre (6) ou le manchon (4) comporte au moins deux, et notamment trois, évidements (12) répartis circonférentiellement dans chacun desquels est reçu au moins un module selon l'une quelconque des revendications 1 à 12, et l'autre élément de l'arbre (6) et de manchon (4) comporte un nombre correspondant de rainures (44) de roulement pour les billes (36).

14. Ensemble selon la revendication 13, **caractérisé en ce que** chaque rainure (44) définit deux lignes longitudinales de contact avec les billes (36) du ou de chaque module associé, symétriques par rapport à un plan médian de la rainure (44).

15. Ensemble selon la revendication 13 ou la revendication 14, **caractérisé en ce qu'**il constitue un ensemble de joint de translation pour colonne de direction pour véhicule automobile.

## Patentansprüche

1. Lineares Gleitführungsmodul mit Kugeln zur Übertragung einer Haupttragkraft zwischen zwei Teilen (4, 6) ohne relatives Spiel und ein lineares Gleiten der beiden Teile (4, 6) zueinander und senkrecht zu der Tragkraft, der Art mit :
- einer Kugelreihe (36), die entlang der linearen Gleitrichtung angeordnet ist, und
- einem Kugelkorb (38), der die Kugeln (36) in einem vorbestimmten Abstand voneinander hält,
- einer Rollschiene (28) für die Kugeln (36), wobei sich diese Schiene (28) entlang der Gleitrichtung erstreckt und praktisch länger ist als die Kugelreihe (36);
- einem Gehäuse (14; 60; 80), das praktisch die Rollschiene (28) umgibt, und das mit den Seitenhaltebereichen des Korbes zusammenwirkt, und
- ersten Federvorrichtungen (26; 62; 64; 76; 82), die zumindest während der Benutzung zwischen dem Gehäuse (14; 60; 80) und der von den Kugeln (36) abgewandten Seite der Rollschiene (28) zusammengedrückt sind.

2. Modul gemäß Anspruch 1, **dadurch gekennzeichnet, dass** es außerdem zweite Federvorrichtungen (78; 84) umfasst, die zwischen jeder Seitenkante der Rollschiene (28) und dem Gehäuse (14; 80) angeordnet sind.

3. Modul gemäß Anspruch 1 oder Anspruch 2, **dadurch gekennzeichnet, dass** die Federvorrichtungen ein Organ aus elastischem Kunststoffmaterial (26; 76) umfassen.

4. Modul gemäß irgendeinem der Ansprüche 1 bis 3, **dadurch gekennzeichnet, dass** die Federvorrichtungen ein Organ aus Federstahl (62; 64; 82; 84) umfassen.

5. Modul gemäß Anspruch 4, **dadurch gekennzeichnet, dass** das Gehäuse (60; 80) aus Federstahlblech besteht, und dass die Federvorrichtungen zu der Rollschiene (28) hin verformte Gehäusebereiche (62; 64; 82; 84) umfassen.

6. Modul gemäß Anspruch 5, **dadurch gekennzeichnet, dass** die verformten Bereiche aus Buckeln (64) oder gefalteten Laschen (62; 82; 84) bestehen.

7. Modul gemäß Anspruch 2 oder irgendeinem der von ihm abhängenden Ansprüche, **dadurch gekennzeichnet, dass** die Rollschiene (28) ein Organ aus einem Block (74) ist.

8. Modul gemäß irgendeinem der Ansprüche 1 bis 6, **dadurch gekennzeichnet, dass** die Rollschiene (28) aus zwei Organen (30A, 30B) besteht, die durch einen mittleren Längsspalt in der Schiene getrennt sind.

9. Modul gemäß irgendeinem der vorherigen Ansprüche, **dadurch gekennzeichnet, dass** das Gehäuse (14; 60; 80) an zumindest einem Ende Anschlagsvorrichtungen (22) umfasst, welche die Rollschiene (28) bezüglich des Gehäuses (14; 60; 80) in Längsrichtung blockieren.

10. Modul gemäß irgendeinem der vorherigen Ansprüche, **dadurch gekennzeichnet, dass** das Gehäuse (14; 60; 80) Anschlagsvorrichtungen (22) für die Kugelreihe (36) oder den Kugelkorb (38) umfasst.

11. Modul gemäß Anspruch 8 oder 9, **dadurch gekennzeichnet, dass** die Anschlagsvorrichtungen zumindest aus einer gefalteten Lasche (22) des Gehäuses bestehen, welche ein Ende der Rollschiene (28) und die Kugelreihe (36) in der Längsrichtung bedeckt.

12. Modul gemäß irgendeinem der vorherigen Ansprüche, **dadurch gekennzeichnet, dass** die Rollschiene (28) zwei in Längsrichtung sich erstreckende Kontaktlinien mit den Kugeln(36) definiert, die symmetrisch bezüglich einer mittleren Ebene der Rollschiene (28) angeordnet sind.

13. Anordnung mit einer Welle (6) und einer Muffe (4), wobei die Welle in die Muffe eingeschoben ist, **dadurch gekennzeichnet, dass** die Welle (6) oder die Muffe (4) zumindest zwei und insbesondere drei über den Umfang verteilte Aussparungen (12) aufweist, in denen jeweils zumindest ein Modul gemäß irgendeinem der Ansprüche 1 bis 12 aufgenommen ist, und das andere Element aus der Welle (6) und der Muffe (4) eine entsprechende Anzahl von Rollrillen (44) für die Kugeln (36) aufweist.

14. Anordnung gemäß Anspruch 13, **dadurch gekennzeichnet, dass** jede Rille (44) zwei in Längsrichtung sich erstreckende Kontaktlinien mit den Kugeln (36) des oder jedes zugeordneten Moduls definiert, die symmetrisch bezüglich einer mittleren Ebene der Rille (44) angeordnet sind.

15. Anordnung gemäß Anspruch 13 oder 14, **dadurch gekennzeichnet, dass** sie eine Translationsverbindungsanordnung für eine Lenksäule für Kraftfahrzeuge bildet.

## Claims

1. A linear roller bearing sliding unit for transmission of a main bearing force between two parts (4, 6) with no relative play and linear sliding of the two parts (4, 6) relative to one another, perpendicular to the bearing force, of the type comprising:
- a row of bearings (36) arranged in the direction of linear sliding, and
- a ball cage (38) holding the bearings (36) at a predetermined distance from one another,
- a roller bar (28) for the bearings (36), this bar (28) extending in the direction of sliding and being substantially longer than the row of bearings (36);
- a housing (14; 60; 80) which substantially surrounds the roller bar (28) and cooperates with lateral retaining parts of the cage, and
- first spring means (26; 62; 64; 76; 82) which are compressed, at least during use, between the housing (14; 60; 80) and the side of the roller bar (28) opposite the bearings (36).

2. Unit according to claim 1, **characterised in that** it further comprises second spring means (78; 84) disposed between each side edge of the roller bar (28) and the housing (14; 80).

3. Unit according to claim 1 or claim 2, **characterised in that** the spring means comprise a resilient member made of plastics (26; 76).

4. Unit according to any one of claims 1 to 3, **characterised in that** the spring means comprise a spring steel member (62; 64; 82; 84).

5. Unit according to claim 4, **characterised in that** the housing (60; 80) is made of sheet spring steel and **in that** the spring means comprise parts (62; 64; 82; 84) of the housing which are deformed towards the roller bar (28).

6. Unit according to claim 5, **characterised in that** the deformed parts are bosses (64) or folded tabs (62; 82; 84).

7. Unit according to claim 2 or any one of the dependent claims, **characterised in that** the roller bar (28) is a one-piece member (74).

8. Unit according to any one of claims 1 to 6, **characterised in that** the roller bar (28) consists of two members (30A; 30B) separated by a median longitudinal slot in the bar.

9. Unit according to any one of the preceding claims, **characterised in that** the housing (14; 60; 80) comprises, at at least one end, stop means (22) which longitudinally block the roller bar (28) relative to the housing (14; 60; 80)..

10. Unit according to any one of the preceding claims, **characterised in that** the housing (14; 60; 80) comprises stop means (22) for the row of bearings (36) or the ball cage (38).

11. Unit according to claim 8 or 9, **characterised in that** the stop means consist of at least one folded tab (22) of the housing which covers one end of the roller bar (28) and the row of bearings (36) in the longitudinal direction.

12. Unit according to any one of the preceding claims, **characterised in that** the roller bar (28) defines two longitudinal lines of contact with the bearings (36), symmetrical with respect to a median plane of the roller bar (28).

13. Assembly comprising a shaft (6) and a sleeve (4), the shaft fitting into the sleeve, **characterised in that** the shaft (6) or the sleeve (4) comprises at least two, and particularly three, circumferentially distributed recesses (12) each of which accommodates at least one unit according to any one of claims 1 to 12, and the other element of the shaft (6) and sleeve (4) comprises a corresponding number of roller grooves (44) for the bearings (36).

14. Assembly according to claim 13, **characterised in that** each groove (44) defines two longitudinal lines of contact with the bearings (36) of the or each associated unit, which are symmetrical with respect to a median plane of the groove (44).

15. Assembly according to claim 13 or 14, **characterised in that** it constitutes a translatory joint assembly for a steering column in a motor vehicle.
